# EUROPÄISCHE PATENTSCHRIFT

(11) **EP 1 445 085 B1**
(45) Veröffentlichungstag und Bekanntmachung des Hinweises auf die Patenterteilung: **10.09.2008**
(21) Anmeldenummer: 03405144.1
(22) Anmeldetag: 04.03.2003
(51) Int. Cl.: B29C 44/32, A47G 1/06

(54) **Verfahren zur Herstellung einer Verbundplatte**
Method of manufacturing a sandwich panel
Procédé de fabrication d'un panneau stratifié

(30) Priorität: 05.02.2003 CH 1722003
(43) Veröffentlichungstag der Anmeldung: 11.08.2004
(73) Patentinhaber: Alcan Technology & Management Ltd., 8212 Neuhausen am Rheinfall (CH)
(72) Erfinder: Behre, Kurt, 49078 Osnabrück (DE); Klenke, Detlev, 49134 Wallenhorst (DE); Seidel, Siegfried, 49205 Hasbergen (DE); Walsch, Thomas, 49525 Lengerich (DE)
(74) Vertreter: Wiedmer, Edwin

(56) Entgegenhaltungen:
- EP-A- 0 355 686
- DE-A1- 19 908 584
- US-A- 4 698 258
- US-A- 5 388 975
- US-B1- 6 460 280

## Beschreibung

Vorliegende Erfindung betrifft ein Verfahren zur Herstellung einer mehrschichtigen Verbundplatte nach dem Oberbegriff des Anspruchs 1.

Es ist bekannt vorgenannte Verbundplatten, auch Leichtstoffplatten oder Sandwichverbundplatten genannt, welche in diskontinuierlichen Fertigungsverfahren hergestellt werden, als Trägerplatten für beispielsweise Display-Anwendungen zu verwenden. Solche Sandwichverbundplatten enthalten in der Regel einen Hartschaumkern mit beidseits davon angeordneten Deckschichten aus z.B. einem beschichteten Papier. Die Leichtstoffplatten zeichnen sich durch eine hohe Steifigkeit bei vergleichsweise geringem Gewicht aus und eignen sich daher z.B. als Trägerplatten zum Aufbringen von Photos oder Drucken.

Die US 6,460,280 beschreibt beispielsweise eine gattungsgemässe Leichtstoffplatte, auf welcher Photos mittels Doppelklebeband fixiert werden. Es ist jedoch vorteilhaft, für grossflächige Anwendungen, sogenannte Kaschierplatten mit einer vollflächig auf wenigstens einer der Deckschichten aufgebrachten Klebstoffschicht zu verwenden. Die Herstellung solcher Kaschierplatten mit vollflächiger Klebstoffschicht erfolgt bis anhin in diskontinuierlichen Verfahrensschritten. So ist beispielsweise bekannt, die Deckschicht der Verbundplatte erst kurz vor dem Kaschiervorgang mit einem Klebstoff zu beschichten. Dies bedingt jedoch, dass der Anwender selbst für den Klebstoffauftrag zuständig ist.

Ein Verfahren gemäss dem Oberbegriff des Anspruchs 1 ist in US-A-5 388 975 offenbart.

Aus US-A-4 698 258 ist bei einem Verfahren zur kontinuierlichen Herstellung einer Verbundplatte mit einer aufschäumbaren Kernschicht und Deckschichten bekannt, mittels einer inline angeordneten Beschichtungsvorrichtung nach dem Aufschäumen der Kernschicht kontinuierlich eine Klebstoffschicht auf die freie Oberfläche wenigstens einer Deckschicht der kontinuierlich hergestellten Verbundplatte aufzutragen.

Aufgabe vorliegender Erfindung ist es, ein Verfahren zur Herstellung einer Verbundplatte vorzuschlagen, welches keine oder im Vergleich zu herkömmlichen Fertigungsverfahren wenigstens eine verringerte Anzahl von diskontinuierlichen Verfahrensschritten aufweist.

Erfindungsgemäss wird die Aufgabe gelöst durch ein Verfahren mit den Merkmalen der Anspruchs 1.

Die Doppelband-Anlage, auch Doppelband-Durchlaufanlage genannt, enthält zweckmässig ein oberes und unteres, jeweils eine obere und untere Deckschicht aufnehmendes Förderband, auch Transportband genannt. Die Doppelband-Anlage kann insbesondere eine Doppelband-Durchlaufpresse sein, wobei hierzu das Förderband vorzugsweise als sogenanntes Pressband ausgebildet ist.

Mittels der oben genannten Doppelband-Anlage lassen sich Verbundplatten in einem Bandschäumverfahren herstellen, welches sich durch die kontinuierliche, quasi endlos-Fertigung von Verbundplatten auszeichnet.

Der erfindungsgemässe, kontinuierliche Fertigungsprozess von Verbundplatten zeichnet sich insbesondere auch dadurch aus, dass die einzelnen Fertigungsschritte inline erfolgen und der Auftrag der Klebstoffschicht wie auch der gegebenenfalls daran anschliessende Auftrag einer Schutzschicht bzw. Schutzfolie integraler Bestandteil dieses Fertigungsprozesses sind.

Die aus der Doppelband-Anlage austretende Verbundplatte weist vor Auftrag der Klebstoffschicht vorzugsweise einen symmetrischen Schichtaufbau mit jeweils beidseits der Hartschaumschicht angeordneten, identischen Deckschichten auf.

Die Klebstoffschicht können ein- oder beidseitig auf die freie Oberfläche der Deckschicht oder Deckschichten aufgetragen werden. Der Klebstoff kann beispielsweise aus der Reihe der lösungsmittelhaltigen, lösungsmittelfreien oder wasserbasierenden Ein- oder Zweikomponentenklebstoffe sein. Der Kleber kann ferner auch ein Kontaktkleber oder ein thermoplastischer Schmelzkleber (Hotmelt) sein.

Der Klebstoff kann aufgrund seiner Eigenschaften permanent, d.h. insbesondere bei Raumtemperaturen, klebrig, d.h. dauerklebrig, sein oder erst durch Anwenden von Wärme oder Hitze unter An- oder Aufschmelzen der Klebstoffschicht Klebewirkung entfalten, wie dies beispielsweise bei Schmelzklebern der Fall ist. Ist der Klebstoff dauerklebrig, so ist auf dessen Oberfläche eine Schutzfolie bzw. Schutzschicht aufzubringen. Bei wärme- bzw. hitzeaktivierbaren Klebstoffen ist die Schutzfolie bzw. Schutzschicht optional. Der Klebstoff kann ferner ein Haftkleber bzw. ein Haftschmelzkleber sein, d.h. die Klebeverbindung ist zerstörungsfrei wiederlösbar.

Liegt der Klebstoff in flüssiger, zähviskoser oder pastöser Form vor, so kann dieser mittels Giessen, Streichen, Sprühen, Spritzen, Walzen, Glatt-Walzen, Walz-Streichen oder Rakeln aufgebracht und verteilt werden. In bevorzugter Ausführung der Erfindung wird die Klebstoffschicht mittels eines Walzauftragsverfahrens, einem Rollrakelstreichverfahren bzw. Roal-Coating oder Rakelstreichverfahren möglichst gleichmässig aufgetragen.

Ist der Klebstoff ein thermoplastischer Schmelzkleber so kann dieser auch als aufschmelzbare Folie auf die Deckschichten der Verbundplatte appliziert werden. Die Folie wird hierzu bevorzugt von einer Folienrolle abgewickelt und kontinuierlich der Deckschicht zugeführt und gegebenenfalls mittels Anpresswalzen auf die Deckschicht aufgetragen.

Die Klebstoffschicht wird vorzugsweise vollflächig, homogen und von gleichmässiger Dicke auf die Deckschicht oder Deckschichten aufgetragen. Es ist jedoch auch denkbar, dass die Klebstoffschicht je nach Verwendungszweck der Verbundplatten gezielt teilflächig und/oder in unterschiedlichen Schichtdicken aufgetragen wird.

Die erfindungsgemässe Herstellung der Klebstoffschicht in einem integrierten Fertigungsschritt in der Herstellung von Verbundplatte erlaubt nämlich die gezielte teilflächige Klebstoffbeschichtung sowie die gezielte Steuerung des Klebstoffauftrags und der daraus resultierenden Klebstoffschichtdicken bzw. des Flächengewichts. Ferner kann mit verhältnismässig wenig Aufwand und innert kurzer Zeit die Klebstoffcharakteristik durch Änderung der Klebstoffzusammensetzung oder durch Austausch des Klebstoffsystems gezielt beeinflussen. Selbstverständlich können Mittel zur elektronischen Datenverabeitung, wie Computer, eingesetzt werden, welche den Klebstoffauftrag und die oben genannten Eigenschaften steuern und überwachen.

In bevorzugter Ausführung der Erfindung wird auf die Klebstoffschicht, wie oben bereits erwähnt, eine Schutzschicht bzw. eine Schutzfolie aufgetragen. Die Schutzschicht bzw. Schutzfolie dient als Schutzabdeckung, welche unmittelbar vor der Kaschierung vom Verbraucher zwecks Freilegen der Klebstofffläche entfernt wird. Die Schutzfolie bzw. Schutzschicht weist daher auf der der Klebstoffschicht zugewandten Seite bevorzugt eine Trennschicht bzw. Trennfilm auf. Die Trennschicht kann beispielsweise eine silikonisierte Oberfläche darstellen. Die silikonisierte Oberfläche wird beispielsweise hergestellt, indem in einem Lösungsmittel gelöste oder in einer Dispersion dispergierte Silikonverbindungen unter anschliessender Vernetzung auf die Oberfläche der Schutzschicht bzw. Schutzfolie aufgebracht werden. Silikonisierte Oberflächen sind in der Regel sehr glatt und rutschig, so dass gebräuchliche Kleber darauf keinen Halt finden.

Die Schutzschicht bzw. Schutzfolie besteht bevorzugt aus einem Kunststoff bzw. ist eine Kunststofffolie, z.B. aus Polyolefin, wie Polyethylen, Polypropylen, aus Polyester oder aus Polyamid.

Die silikonisierte Schutzfolie wird in bevorzugter Ausführung direkt von einer Folienrolle abgewickelt und mittels Auftragsvorrichtung auf die Klebstoffschicht oder - schichten der kontinuierlich und endlos aus der Doppelband-Anlage und der nachfolgenden Klebstoffbeschichtungsvorrichtung austretenden Verbundplatte aufgetragen und gegebenenfalls mittels Anpresswalzen angepresst.

Die Schutzfolie bzw. -film dient als Transportschutz damit die gegebenfalls bei Raumtemperatur haftende bzw. klebende Klebstoffschicht nicht beschädigt bzw. deren Klebewirkung nicht beeinträchtigt werden. Die Schutzfolie bzw. Schutzfilm wird vor dem Gebrauch der Verbundplatte bzw. vor dem Kaschieren zwecks Freilegen der Klebstoffschicht von dieser entfernt.

Die mit einem Klebstoff und gegebenenfalls mit einer Schutzfolie oder -film beschichtete Verbundplatte wird mittels Förderanlage, beispielsweise einem Rollenförderer bzw. Walzenrollenförderer, kontinuierlich einer quer arbeitenden Säge-, Schneid- oder Stanzvorrichtung, insbesondere einer Querschneideinrichtung, zugeführt, an welcher die endlos nachgeführt Verbundplatte zu Einzelplatten abgelängt bzw. in Format geschnitten wird. Das Ablängen zu Einzelplatten kann mittels Säge-, Schneid- oder Stanzwerkzeugen geschehen. Das Schneidwerkzeug kann beispielsweise aus Messer oder einem Laserstrahl bestehen. Ferner kann das Schneidwerkzeug auch mittels Wasserstrahl arbeiten. Durch das Ablängen bzw. Formatschneiden wird die endlos aus der Fertigungslinie austretende Verbundplatte kontinuierlich in Einzelplatten zerteilt. Ein Vorteil des Wasserstrahlschneidens liegt darin, dass keine Nachbearbeitung der Schnittflächen notwendig ist.

Es können überdies längs arbeitende Säge-, Schneid- oder Stanzwerkzeuge, insbesondere Längsschneideeinreichtungen, vorgesehen sein, welche die seitlichen Ränder der Verbundplatte zuschneiden.

Die abgelängten Verbundplatten werden nachfolgend vorzugsweise zu Stapeln bzw. Verpackungseinheiten zusammengefasst, was z.B. mittels einer Stapel- oder Palettiervorrichtung geschehen kann. Die Verpackungseinheiten werden nachfolgend von der Fertigungslinie weggeführt.

Die Stapel- bzw. Palettiervorrichtung ist bevorzugt ebenfalls inline angeordnet. Die Stapel- bzw. Palettiervorrichtung ist hierzu zweckmässig der Säge-, Schneid- oder Stanzvorrichtung nachgeordnet. Die zu einzelnen Stapeln bzw. Verpackungseinheiten zusammengefassten Verbundplatten können inline mit einer Umverpackung, wie z.B. einer Kartonumverpackung, versehen werden.

Die nach dem erfindungsgemässen Verfahren hergestellte Verbundplatte enthält eine Hartschaumschicht aus Polyurethan. Die Hartschaumschicht ist beispielsweise offenzellig, teilweise offenzellig und vorzugsweise geschlossenzellig. Die Hartschaumschicht weist beispielsweise über 90% geschlossene Poren auf. Die Hartschaumschicht weist beispielsweise ein Raumgewicht von 35 - 55 kg/m³ auf. Die Dicke der Hartschaumschicht kann beispielsweise 1 bis 50 mm, vorzugsweise 2 bis 25 mm und insbesondere 3 bis 15 mm betragen.

Das schäumbare Ausgangsgemisch wird vorzugsweise in Form eines flüssigen, reaktiven Ein- oder Mehrkomponenten Ausgangsgemischs zwischen die beiden Deckschichten in der Doppelband-Anlage zugeführt. In einem nachfolgenden Prozessschritt wird das Ausgangsgemisch geschäumt, wobei dieses während des Aufschäumprozesses unter Ausbildung einer Sandwich-Struktur eine innige, trennfeste Verbindung mit den Deckschichten eingeht.

In bevorzugter Ausführung handelt es sich beim Ausgangsmaterial um ein in flüssiger Form zugeführtes PUR-System, aus welchem im Bandschäumverfahren eine PUR-Hartschaumschicht hervorgeht.

Die Deckschichten sind aus einem Verbundmaterial. Die Deckschichten enthalten eine Schicht aus Papier, insbesondere Kraftpapier oder Kraftliner, oder Karton. Das Papier kann beispielsweise ein Flächengewicht von 7 - 150 g/m² und der Karton ein solches von 150 - 300 g/m² aufweisen.

Auf der Papier- bzw. Kartonschicht können ein- oder beidseitig weitere Schichten angeordnet sein. Auf der Papier- bzw. Kartonschicht kann beispielsweise ein- oder beidseitig eine Schicht aus einem Kunststoff, wie Polypropylen, Polyamid, PET (Polyethylenterephthalat) und insbesondere Polyethylen angeordnet sein. Ferner kann auf der Kunststoffschicht eine Metallschicht, wie z.B. eine Metallfolie, wie Aluminiumfolie, angeordnet sein. Die Deckschicht kann ferner auf der Sichtfläche, auf welcher der Klebstoff aufgebracht wird, eine Lackschicht aufweisen. Die Lackschicht kann farbig, farblos, weiss oder schwarz sein. Ferner kann die Lackschicht opak, durchscheinend oder transparent sein. Die Lackschicht kann gegebenenfalls unmittelbar auf der Metallschicht angeordnet sein.

In bevorzugter Ausführung enthält die Deckschicht eine erste Schicht aus einem Papier oder Karton, auf jener der Hartschaumschicht abgewandten Oberfläche der Papier- oder Kartonschicht eine Schicht aus einem Kunststoff, insbesondere aus Polyethylen und auf der Kunststoffschicht eine Folie aus einem Metall, insbesondere aus Aluminium, und auf der Metallfolie eine Lackschicht. Die Kunststoffschicht, insbesondere die Kunststoffschicht aus Polyethylen weist beispielsweise ein Flächengewicht von 10 bis 100 g/m², vorzugsweise von 20 - 60 g/m², und insbesondere von rund 35 - 45 g/m² auf. Die Metallfolie hat beispielsweise eine Dicke von 5 bis 20 µm und insbesondere von 6 - 12 µm. Die Deckschicht weist beispielsweise ein gesamthaftes Flächengewicht von 100 - 400 g/m², vorzugsweise von 150 - 300 g/m², und insbesondere von 150 - 250 g/m², auf.

Die Deckschicht kann anstelle einer Metallfolie auch eine metallisierte Folie enthalten. Die Metallisierung kann mittels eines herkömmlichen Dünnschichtverfahrens, wie z.B. Vakuumbeschichtungsverfahrens, auf eine Trägerfolie aufgebracht werden. Als Trägerfolien eignen sich beispielsweise Kunststofffolien, Papier, Karton oder Folienverbunde aus den vorgenannten Materialien. Die Trägerfolien können ihrerseits weitere Beschichtungen, wie z.B. Lackbeschichtungen enthalten. Die Metallisierungsschicht kann eine Schichtdicke von z.B. 5 bis 500 nm, insbesondere von 10 bis 200 nm, aufweisen.

Verbundplatten mit oben beschriebenen Deckschichten, welche eine Schicht aus Kunststoff und/oder Metall enthalten, zeichnen sich durch ihre Feuchteresistenz aus. Das heisst, die Feuchtigkeit kann nicht in die Zellstoffschicht der Deckschicht bzw. in die Schaumstoffschicht der Verbundplatte eindringen. Dadurch wird das Verziehen der Verbundplatten durch Feuchtigkeitsänderungen verhindert. Eine solche Verbundplatte weist daher eine äusserst stabile Planlage auf.

In bevorzugter Ausführung sind die Deckschichten ferner durch die Art ihres Aufbaus flammgeschützt. Dies wird erreicht, indem diese wie oben beschrieben beispielweise eine Metallschicht bzw. Metallfolie enthalten. Der Flammschutz kann auch durch die Verwendung von thermoplastischen Deckschicht-Oberflächen gewährleistet sein.

Die Klebverbindung zwischen Deckschicht und Hartschaumschicht wird vorzugsweise durch die Hartschaumschicht selbst gebildet. Die Klebverbindung erfolgt hier im Bandschmäumverfahren, wobei während des Schäumungs- und Aushärtungsvorgangs die Hartschaumschicht mit den anliegenden Deckschichten eine innige, trennfeste Klebverbindung eingeht. Die Deckschichten können jedoch an ihren der Hartschaumschicht anliegenden Oberflächen eine Klebstoffschicht oder Vorbehandlungsschichten bzw. Haftvermittler aufweisen.

Die Verbundplatte kann in verschiedenen Dicken und Formaten hergestellt werden. Dies geschieht beispielsweise mittels Kalibrierung der Vorrichtung, insbesondere der Doppelband-Anlage, und/oder durch die Wahl der Rezeptur und Menge des Schaumstoffausgangsgemischs. Die Verbundplatte weist beispielsweise eine Dicke von 2 mm oder grösser, vorzugsweise von 5 mm oder grösser und von 50 mm oder kleiner, vorzugsweise 30 mm oder kleiner und insbesondere 20 mm oder kleiner, auf.

Die erfindungsgemäss hergestellte Verbundplatte wird bevorzugt als selbstklebende Kaschierplatte verwendet. Selbstklebend bedeutet, dass die Verbundplatte wie oben ausführlich beschrieben bereits ein- oder beidseitig mit einer Klebstoffschicht versehen ist und daher vor deren Verwendung vorgängig nicht mehr ein Klebstoff auf die Verbundplatte appliziert werden muss. Dies erlaubt ein schnelles Kaschieren der Verbundplatte, weshalb diese auch Schnellkaschierplatte genannt wird.

Die aus der Fertigungslinie austretende Verbundplatte kann also je nach Verwendungszweck ein- oder beidseitig selbstklebend und kaschierfertig sein. Ist auf der oder den Klebstoffschicht bzw. -schichten eine Schutzfolie bzw. Schutzschicht angeordnet, was insbesondere bei dauerklebrigen Klebstoffschichten bevorzugt der Fall ist, so muss diese vor dem Kaschieren zuerst entfernt werden.

Die erfindungsgemässen Verbundplatten finden bevorzugt Verwendung in Display-Anwendungen, als Innen- oder Aussenschilder, in Ausstellungs- und Messeständen, bei Inneneinrichtungen, zu Ladenausstattungen oder allgemein für Dekorationen, wie Schaufensterdekorationen. Auf die Verbundplatten lassen sich beispielsweise Drucke, wie Digitaldrucke, Photos, Pläne, nicht selbstklebende Folien sowie Gewebe aufbringen.

Die Verbundplatten eignen sich überdies auch als Fill-in-Platten für Mobilmessestände und Rahmenelemente. Ferner kann die besagte Verbundplatte auch Verwendung finden als Dekupierplatte zum Ausschneiden, Ausfräsen, Ausstanzen oder Aussägen von Objekten wie z.B. Logos oder Schriftzeichen.

Die selbstklebende Deckschichten der erfindungsgemäss hergestellen Verbundplatten zeichnen sich durch ihre hohe Klebkraft sowie durch eine ausgezeichnete Planlage aus. Das Kaschiergut bleibt jedoch trotz den guten Klebeeigenschaften beim Aufbringen und Aufkleben auf die Trägerplatte bevorzugt für eine gewisse Zeit repositionierbar. Die erfindungsgemäss hergestellten Verbundplatten eignen sich sowohl für manuelle als auch für maschinelle Kaschierarbeiten.

Verbundplatten, welche wie oben beschrieben ein- oder beidseitig mit einem wärme- bwz. hitzeaktivierbarem Kleber beschichtet sind, werden auch als Heisskaschierplatten bezeichnet. Sie eignen sich insbesondere als Trägerplatten für hitzebeständige Digitaldrucke Fotos, Drucke, Pläne nicht selbstklebende Folien oder Gewebe.

Im folgenden wird die Erfindung beispielhaft und mit Bezug auf die beiliegenden Zeichnungen näher erläutert. Es zeigen:
- Fig. 1:: schematische Querschnittsdarstellung der Schichtabfolge einer erfindungsgemässen Verbundplatte;
- Fig. 2:: schematische Querschnittsdarstellung der Schichtabfolge der Deckschicht einer erfindungsgemässen Verbundplatte;
- Fig. 3:: schematische Darstellung einer Vorrichtung zur kontinuierlichen Herstellung der erfindungsgemässen Verbundplatte.

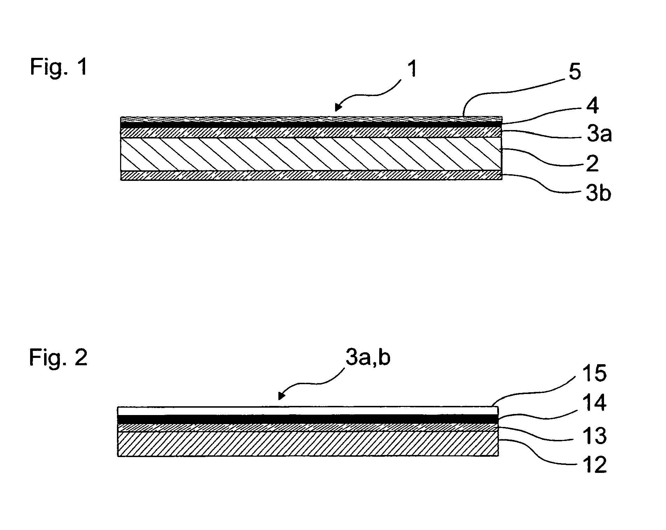

Die Verbundplatte 1 gemäss Fig. 1 enthält eine Hartschaumschicht 2, welche vorzugsweise aus einem Polyurethan besteht. Auf den Oberflächen der Hartschaumschicht ist beidseits unter Ausbildung einer Klebeverbindung je eine erste 3a und zweite 3b Deckschicht angeordnet. Die Deckschicht 3a,b besteht aus einem Verbundmaterial gemäss Fig. 2. Auf der Oberfläche der ersten Deckschicht 3a ist eine Klebstoffschicht 4 aus einem Haftkleber und auf der Klebstoffschicht eine Schutzfolie 5 aufgebracht. Die Klebstoffschicht bildet im kaschierbereiten Zustand der Verbundplatte, d.h. nach Entfernung der Schutzfolie 5, eine freie Oberfläche der Verbundplatte aus.

Fig. 2 zeigt den Aufbau einer geeigneten Deckschicht 3a,b. Diese enthält eine Zellstoffschicht 12 (z.B. ein Papier oder Karton) und darauf angeordnet ein Film aus einem Polyethylen 13. Auf dem Polyethylenfilm 13 ist eine Aluminiumfolie 14 angeordnet, welche ihrerseits durch eine Lackschicht 15 überdeckt ist. Die Lackschicht 15 bildet hierbei die Oberfläche für die spätere Klebstoffbeschichtung aus. Die spezifische Beschaffenheit der Lackschicht gibt der Oberfläche der Verbundplatte das gewünschte optische Aussehen. Sie kann beispielsweise weiss, schwarz oder farbig sein.

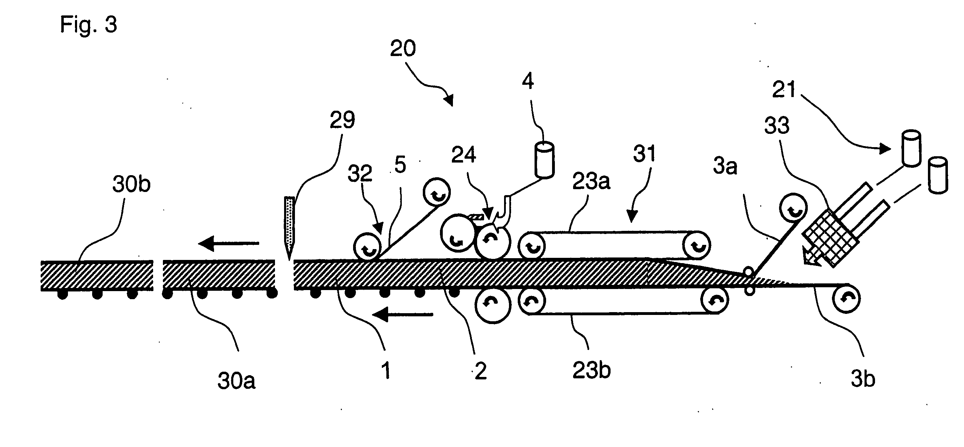

Die Herstellung von erfindungsgemässen Verbundplatten 1 erfolgt in-line an einer kontinuierlichen arbeitenden Fertigungsanlage 20 (Fig. 3). Die Fertigung der zwischen zwei Deckschichten 3a,b angeordneten Hartschaumschicht 2 erfolgt in einem Bandschäumverfahren mittels einer Doppelband-Anlage 31. Hierzu werden eine obere und untere Deckfolie oder Deckschicht 3a,b kontinuierlich von Rollen abgewickelt und einem oberen resp. unteren Förderband 23a,b zugeführt. Zwischen die beiden Deckschichten 3a,b bzw. auf die untere Deckschicht 3b wird eine schäumbare, reaktive Ausgangsmischung 21 aus einem Mischkopf 33 zugeführt. In der nachfolgenden Doppelband-Anlage 31 wird die Ausgangsmischung 21 zwischen den Deckschichten 3a,b zu einem Hartschaum geschäumt und ausgehärtet, wobei die Hartschaumschicht mit den Deckschichten unter Ausbildung eines Sandwich-Verbundes eine innige Klebeverbindung eingeht. Die erste Deckschicht 3a des Sandwich-Verbundes wird anschliessend an einer der Doppelband-Anlage 31 nachgeordneten Klebstoffbeschichtungsvorrichtung 24 mittels eines kontinuierlichen Beschichtungsverfahrens, hier ein Rollrakel-Streichverfahren, mit einem Klebstoff 4 beschichtet.

Nach Stabilisierung der Klebstoffschicht 4 wird in einem weiteren kontinuierlichen Verfahrensschritt an einer nachfolgenden Auftragsvorrichtung 32 eine Schutzfolie 5 auf den Klebstofffilm wiederablösbar aufgebracht. Die Schutzfolie 5 soll den Klebstofffilm bis zum weiteren Einsatz der Verbundplatte 1 vor Beschädigungen, wie z.B. Kratzer, sowie vor Verschmutzung, wie z.B. Staub, schützen.

Die beschichtete Verbundplatte 1 wird nachfolgend an einer Ablängstation 29 in-line zu Einzelplatten 30a,b, d.h. in sogenannte Formatzuschnitte abgelängt.

Die abgelängten Einzelplatten 30a,b werden in einem nachfolgenden Verfahrensschritt vorzugsweise zu Stapeln zusammengefasst, was z.B. mittels Stapelvorrichtung geschehen kann, und von der Fertigungslinie weggeführt.

## Patentansprüche

1. Verfahren zur Herstellung einer mehrschichtigen Verbundplatte (1) für Displayanwendungen, enthaltend eine Hartschaumschicht (2) mit beidseits der Hartschaumschicht (2) angeordneten Deckschichten (3a, 3b), wobei in einem kontinuierlichen Verfahren zwei Deckschichten (3a, 3b) von Rollen abgewickelt und einer Doppelband-Anlage (31) zugeführt werden, zwischen die zwei Deckschichten (3a, 3b) ein schäumbares Ausgangsgemisch (21) zugeführt und das Ausgangsgemisch (21) in einem Bandschäumverfahren zwischen den beiden Deckschichten (3a, 3b) zu einer aus Polyurethan bestehenden Hartschaumschicht (2) bandgeschäumt und ausgehärtet wird,
**dadurch gekennzeichnet, dass**
die Deckschichten (3a, 3b) aus einem ein Papier oder Karton enthaltenden Verbundmaterial bestehen und mittels einer der Doppelband-Anlage (31) nachgeordneten und inline angeordneten Beschichtungsvorrichtung (24) kontinuierlich eine Klebstoffschicht (4) auf die freie Oberfläche wenigstens einer Deckschicht (3a, 3b) der kontinuierlich und endlos aus der Doppelband-Anlage (31) austretenden Verbundplatte (1) aufgetragen wird.

2. Verfahren nach Anspruch 1, wobei auf der oberen und unteren Deckschicht (3a, 3b) eine Klebstoffschicht (4) aufgetragen wird.

3. Verfahren nach Anspruch 1 oder 2, wobei die Klebstoffschicht (4) in einem Walzauftragverfahren, Streichverfahren oder Rollrakel-Streichverfahren aufgetragen wird.

4. Verfahren nach einem der Ansprüche 1 bis 3, wobei mittels einer der Beschichtungsvorrichtung (24) nachfolgenden und inline angeordneten Auftragsvorrichtung (32) eine Schutzfolie oder Schutzschicht (5) auf die Klebstoffschicht (4) aufgetragen wird.

5. Verfahren nach einem der Ansprüche 1 bis 4, wobei die Klebstoffschicht (4) aus einem thermoplastischen Klebstoff ist.

6. Verfahren nach einem der Ansprüche 1 bis 5, wobei die Klebstoffschicht (4) aus einem dauerklebrigen Klebstoff ist.

7. Verfahren nach einem der Ansprüche 1 bis 6, wobei die Klebstoffschicht (4) ein bei Raumtemperatur haftender Haftkleber oder Haftschmelzkleber ist.

8. Verfahren nach Anspruch 5, wobei die Klebstoffschicht (4) aus einem wärme-oder hitzeaktivierbaren, thermoplastischer Klebstoff ist.

9. Verfahren nach einem der Ansprüche 1 bis 8, wobei die kontinuierlich gefertigte Verbundplatte (1) nach Auftrag der Klebstoffschicht (4) oder der Schutzschicht (5) an einer Ablängvorrichtung (29) zu Einzelplatten (30a, 30b) abgelängt wird.

10. Verfahren nach einem der Ansprüche 1 bis 9, wobei die Deckschicht (3a, 3b) eine erste Schicht (12) aus Papier oder Karton enthält und auf der dem Hartschaumkem (2) abgewandten Oberfläche der ersten Schicht (12) eine Schicht (13) aus einem Kunststoff, insbesondere aus Polyethylen, und auf der Kunststoffschicht (13) eine Folie (14) aus einem Metall, insbesondere aus Aluminium, und auf der Metallfolie (14) eine Lackschicht (15) angeordnet ist.

## Claims

1. Method of manufacturing a multi-layered sandwich panel (1) for display applications, comprising a rigid foam layer (2) with outer layers (3a, 3b) arranged on both sides of the rigid foam layer (2), two outer layers (3a, 3b) being unwound from rolls in a continuous process and fed to a twin-belt unit (31), a foamable starting mixture (21) being supplied between the two outer layers (3a, 3b) and the starting mixture (21) being belt-foamed and set between the two outer layers (3a, 3b) in a belt-foaming process to form a rigid foam layer (2) consisting of polyurethane, **characterized in that** the outer layers (3a, 3b) consist of a composite material comprising paper or card and, by means of a coating device (24) arranged downstream of the twin-belt unit (31) and in line, an adhesive layer (4) is continuously applied to the free surface of at least one outer layer (3a, 3b) of the sandwich panel (1) emerging continuously and endlessly from the twin-belt unit (31).

2. Method according to Claim 1, an adhesive layer (4) being applied to the upper and lower outer layers (3a, 3b).

3. Method according to Claim 1 or 2, the adhesive layer (4) being applied in a rolling application process, coating process or metering-bar coating process.

4. Method according to one of Claims 1 to 3, a protective film or protective layer (5) being applied to the adhesive layer (4) by means of an application device (32) arranged downstream of the coating device (24) and in line.

5. Method according to one of Claims 1 to 4, the adhesive layer (4) being of a thermoplastic adhesive.

6. Method according to one of Claims 1 to 5, the adhesive layer (4) being of a permanently tacky adhesive.

7. Method according to one of Claims 1 to 6, the adhesive layer (4) being a pressure-sensitive adhesive or pressure-sensitive hotmelt adhesive that is adhesive at room temperature.

8. Method according to Claim 5, the adhesive layer (4) being of a heat-activatable, thermoplastic adhesive.

9. Method according to one of Claims 1 to 8, the continuously produced sandwich panel (1) being cut to length into individual panels (30a, 30b) on a cutting-to-length device (29) after application of the adhesive layer (4) or the protective layer (5).

10. Method according to one of Claims 1 to 9, the outer layer (3a, 3b) comprising a first layer (12) of paper or card and a layer (13) of a plastic, in particular of polyethylene, being arranged on the surface of the first layer (12) that is facing away from the rigid foam core (2), a foil (14) of a metal, in particular of aluminium, being arranged on the layer of plastic (13) and a lacquer layer (15) being arranged on the metal foil (14).

## Revendications

1. Procédé de fabrication d'un panneau stratifié multicouche (1) pour des applications d'exposition, contenant une couche de mousse dure (2) avec des couches de recouvrement (3a, 3b) disposées de part et d'autre de la couche de mousse dure (2), deux couches de recouvrement (3a, 3b) étant déroulées de rouleaux dans un procédé continu, et étant acheminées à une installation à double bande (31), un mélange de départ moussable (21) étant acheminé entre les deux couches de recouvrement (3a, 3b) et le mélange de départ (21) étant moussé sur bande et durci dans un procédé de moussage sur bande entre les deux couches de recouvrement (3a, 3b) pour former une couche de mousse dure (2) constituée de polyuréthane,
**caractérisé en ce que**
les couches de recouvrement (3a, 3b) se composent d'un matériau composite contenant du papier ou du carton, et une couche d'adhésif (4) est appliquée en continu au moyen d'un dispositif de revêtement (24) disposé en ligne et en aval de l'installation à double bande (31), sur la surface libre d'au moins une couche de recouvrement (3a, 3b) du panneau stratifié (1) sortant en continu et sans fin hors de l'installation à double bande (31).

2. Procédé selon la revendication 1, dans lequel une couche d'adhésif (4) est appliquée sur la couche de recouvrement supérieure et la couche de recouvrement inférieure (3a, 3b).

3. Procédé selon la revendication 1 ou 2, dans lequel la couche d'adhésif (4) est appliquée dans un procédé d'enduction au rouleau, un procédé de couchage, ou un procédé de couchage au rouleau.

4. Procédé selon l'une quelconque des revendications 1 à 3, dans lequel, au moyen d'un dispositif d'enduction (32) disposé en ligne et en aval du dispositif de revêtement (24), une feuille de protection ou une couche de protection (5) est appliquée sur la couche d'adhésif (4).

5. Procédé selon l'une quelconque des revendications 1 à 4, dans lequel la couche d'adhésif (4) est constituée d'un adhésif thermoplastique.

6. Procédé selon l'une quelconque des revendications 1 à 5, dans lequel la couche d'adhésif (4) se compose d'un adhésif durable.

7. Procédé selon l'une quelconque des revendications 1 à 6, dans lequel la couche d'adhésif (4) est une colle auto-adhésive adhérant à température ambiante ou une colle à fusion auto-adhésive.

8. Procédé selon la revendication 5, dans lequel la couche d'adhésif (4) est constituée d'un adhésif thermoplastique thermosensible ou activable à la chaleur.

9. Procédé selon l'une quelconque des revendications 1 à 8, dans lequel le panneau stratifié (1) fabriqué en continu est découpé à la longueur voulue après l'enduction de la couche d'adhésif (4) ou de la couche de protection (5) sur un dispositif de découpage (29) pour former des panneaux individuels (30a, 30b).

10. Procédé selon l'une quelconque des revendications 1 à 9, dans lequel la couche de recouvrement (3a, 3b) contient une première couche (12) de papier ou de carton et sur la surface de la première couche (12) tournée à l'opposé du noyau de mousse dure (2) est disposée une couche (13) de plastique, notamment en polyéthylène, et sur la couche de plastique (13) est disposée une feuille (14) constituée d'un métal, notamment d'aluminium, et sur la feuille métallique (14) est disposée une couche de vernis (15).
